# EUROPÄISCHE PATENTSCHRIFT

(11) **EP 3 325 317 B1**
(45) Veröffentlichungstag und Bekanntmachung des Hinweises auf die Patenterteilung: **10.04.2019**
(21) Anmeldenummer: 16723744.5
(22) Anmeldetag: 19.05.2016
(51) Int. Cl.: B60R 25/20, B60R 25/021

(54) **KRAFTFAHRZEUG-LENKSCHLOSS**
MOTOR VEHICLE STEERING LOCK
VERROU DE DIRECTION DE VÉHICULE AUTOMOBILE

(30) Priorität: 21.07.2015 DE 102015111832
(43) Veröffentlichungstag der Anmeldung: 30.05.2018
(73) Patentinhaber: Huf Hülsbeck & Fürst GmbH & Co. KG, 42551 Velbert (DE)
(72) Erfinder: HEPPNER, Mario, 82008 Unterhaching (DE); SCHÖPPE, Florian, 85748 Garching (DE)
(74) Vertreter: Zenz Patentanwälte Partnerschaft mbB
(86) Internationale Anmeldenummer: PCT/EP2016/061254
(87) Internationale Veröffentlichungsnummer: WO 2017/012734

(56) Entgegenhaltungen:
- DE-U1- 9 202 367
- DE-U1- 29 611 043
- GB-A- 1 333 779

## Beschreibung

Die Erfindung richtet sich auf ein Kraftfahrzeug-Lenkschloss, aufweisend ein Gehäuse, in welchem ein Schließzylinder mit einer Schaltwelle angeordnet ist, die verschiedene Drehstellungen einnehmen kann, und ein mit der Schaltwelle des Schließzylinders bewegungsgekoppeltes Stellelement eines Zündschalters, der in Abhängigkeit der Drehstellung der Schaltwelle eine gewünschte Funktion im Kraftfahrzeug auslöst.

Ein Kraftfahrzeug-Lenkschloss der Eingangs bezeichneten Art ist zum Beispiel aus der DE 9202367 U bekannt. Bei diesem bekannten Kraftfahrzeug-Lenkschloss erfolgt die Kupplung einer Schaltwelle eines Schließzylinders mit einem Stellelement eines Zündschalters bzw. Zündanlassschalters durch eine Steckverbindung, indem ein stegförmiger Ansatz der Schaltwelle, der in Längsrichtung bzw. Axialrichtung hervorsteht, in eine schlitzförmige Aufnahme in dem Stellelement eingesteckt wird. Diese Steckverbindung überträgt die Drehung eines mechanischen Schlüssels bzw. Zündschlüssels, der in den Schließzylinder eingesteckt ist und zum Beispiel beim Starten des Kraftfahrzeuges gedreht wird. Bei dieser Drehung wird die Schaltwelle aus einer Ruhestellung oder Verriegelungsstellung in eine Arbeitsstellung verdreht, wobei die Verdrehung in eine erste als ACC bezeichnete Stufe, bei der die Stromversorgung im Fahrzeug ausschließlich aus der Starterbatterie erfolgt, in eine zweite Stufe, bei der die Spannungsversorgung für Zündung und Motor-Verbraucher eingeschaltet sind, oder in eine dritte Stufe, in welcher der elektrische Anlasser eingeschaltet wird und ein federkraftbewehrter Kontakt den Zündschlüssel bei Loslassen in die Stellung der zweiten Stufe zurückstellt, erfolgen kann.

Die aus dem Stand der Technik bekannte Steckverbindung zwischen Schaltwelle und Stellelement weist einen Toleranzausgleich in Längs- bzw. Axialrichtung der Schaltwelle auf, der aber für das Schaltverhalten nicht maßgebend ist. Denn dafür ist ein Ausgleich in Drehrichtung notwendig, der aber bei der aus dem Stand der Technik bekannten Steckverbindung nur bis zu einer Drehung von maximal 90° möglich ist, da die Schaltwelle dann gegen das Stellelement verspannt ist. Ferner führen Toleranzprobleme der Steckverbindung zu einem Verkanten der Passung, was letztlich zu einer Überlastung der durch die Drehung kontaktierten Federelemente im Zündanlassschalter bzw. Zündschalter führt und letztlich die Funktionssicherheit gefährdet sowie zu Beschädigungen führen kann.

Der Erfindung liegt die Aufgabe zugrunde eine Lösung zu schaffen, die auf konstruktiv einfache Weise und kostengünstig ein Kraftfahrzeug-Lenkschloss bereitstellt, welches das aus dem Stand der Technik bekannte Toleranzproblem löst und eine Kupplungsmöglichkeit für Schaltwelle und Stellelement bietet, durch die eine über die in Richtung der Längsachse hinausgehende Spanungsfreiheit erreichbar ist.

Bei einem Kraftfahrzeug-Lenkschloss der Eingangs bezeichneten Art wird die Aufgabe erfindungsgemäß dadurch gelöst, dass die Schaltwelle des Schließzylinders und das Stellelement des Zündschalters über ein eine Relativbewegung der Schaltwelle zu dem Stellelement in eine radial zur Längsachse der Schaltwelle verlaufende erste Achsrichtung und eine Relativbewegung des Stellelements zu der Schaltwelle in eine zweite, senkrecht zu der ersten Achsrichtung verlaufende Achsrichtung zulassendes Zwischenausgleichselement drehfest miteinander verbunden sind.

Vorteilhafte und zweckmäßige Ausgestaltungen und Weiterbildungen der Erfindung ergeben sich aus den Unteransprüchen.

Durch die Erfindung wird ein Kraftfahrzeug-Lenkschloss zur Verfügung gestellt, das sich durch eine funktionsgerechte Konstruktion auszeichnet und einen einfachen und kostengünstigen Aufbau aufweist. Bei den bekannten Kraftfahrzeug-Lenkschlössern aus dem Stand der Technik war es das Problem, dass die Kupplung zwischen Schaltwelle des Schließzylinders und Stellelement des Zündschalters keinen Toleranzausgleich in Drehrichtung eines Zündschlüssels bzw. in Drehrichtung der Schaltwelle des Schließzylinders ermöglichte, so dass Bauteile des Zündschalters überlastet und beschädigt werden können. Durch die Erfindung wird nun eine Lösung bereitgestellt, durch die ein Toleranzausgleich in Drehrichtung der Verbindung von Schaltwelle des Schließzylinders und Stellelement des Zündschalters gegeben ist. Der Toleranzausgleich ermöglicht dabei zum einen eine Relativbewegung der Schaltwelle zu dem Stellelement in eine radial zur Längsachse der Schaltwelle verlaufende erste Achsrichtung und zum anderen eine Relativbewegung des Stellelements zu der Schaltwelle in eine zweite, senkrecht zu der ersten Achsrichtung verlaufende Achsrichtung. Durch das erfindungsgemäße Zwischenausgleichselement ist eine Möglichkeit gegeben, Toleranzen zwischen dem Schließzylinder und dem steuernden Stellelement auszugleichen, was auch die Montage dieser beiden Baugruppen wesentlich vereinfacht. Dabei ist bei der Erfindung ein Toleranzausgleich in Längsrichtung bzw. Axialrichtung der Schaltwelle nach wie vor wie im Stand der Technik gegeben. Ändert man den Blockwinkel, so kann sich das Zwischenausgleichselement frei zwischen der Schaltwelle und dem Stellelement in radialer Richtung bewegen, wobei axiale Kräfte von dem Zwischenausgleichselement nicht aufgenommen werden. Als Verschleißteil kann das Zwischenausgleichselement leicht ausgetauscht werden.

Als besonders effektiv hat es sich in Ausgestaltung des erfindungsgemäßen Kraftfahrzeug-Lenkschlosses erwiesen, wenn die Schaltwelle an ihrem freien Längsende wenigstens einen in Richtung der Längsachse hervorstehenden Kopplungsansatz aufweist, der in wenigstens eine in dem Zwischenausgleichselement ausgeformte Kopplungsaufnahme spielfrei zu der zweiten Achsrichtung und bewegbar in die erste Achsrichtung eingesteckt ist. Dabei kann der Kopplungsansatz entweder zentrisch oder exzentrisch an dem freien Längsende der Schaltwelle ausgeformt sein. Insbesondere ist der Kopplungsansatz mit Spiel in die erste Achsrichtung und spielfrei in die zweite Achsrichtung in die Kopplungsaufnahme eingepasst.

Konstruktiv besonders günstig ist es dann, wenn in Ausgestaltung der Erfindung der Kopplungsansatz als ein mittiger, querverlaufender Kopplungssteg an dem freien Längsende der Schaltwelle ausgebildet ist und die Kopplungsaufnahme als ein in einer der Schaltwelle zugewandten Seitenfläche des Zwischenausgleichselements ausgeformter Kopplungsschlitz ausgebildet ist, wobei der Kopplungssteg mit Spiel in Längsrichtung und in Richtung der ersten Achsrichtung in den Kopplungsschlitz eingepasst ist.

Hinsichtlich der anderen Relativbewegung ist es in Ausgestaltung der Erfindung ebenso von Vorteil, wenn das Stellelement wenigstens einen in Richtung der Längsachse hervorstehenden Verbindungsansatz aufweist, der in wenigstens eine in dem Zwischenausgleichselement ausgeformte Verbindungsaufnahme bewegbar in die zweite Achsrichtung und spielfrei zu der ersten Achsrichtung eingesteckt ist. Insbesondere ist der Verbindungsansatz mit Spiel in die zweite Achsrichtung und spielfrei in die erste Achsrichtung in die Verbindungsaufnahme eingepasst.

Diesbezüglich sieht die Erfindung in weiterer Ausgestaltung vor, dass der Verbindungsansatz als zwei, sich diametral gegenüberliegende Verbindungszapfen an dem Stellelement ausgebildet ist und die Verbindungsaufnahme als zwei in einer dem Stellelement zugewandten Seitenfläche des Zwischenausgleichselements ausgeformte Radialschlitze ausgebildet ist, wobei die Verbindungszapfen mit Spiel in Längsrichtung und in Richtung der zweiten Achsrichtung in die Radialschlitze eingepasst sind.

In weiterer Ausgestaltung ist vorgesehen, dass das Zwischenausgleichselement scheibenförmig ausgebildet ist, wobei die wenigstens eine Kopplungsaufnahme und/oder die wenigstens eine Verbindungsaufnahme als Ausnehmung in einer jeweiligen Seitenfläche des Zwischenausgleichselements oder als Durchtrittsöffnung im Zwischenausgleichselement ausgeformt ist.

Für eine zweiachsige Spannungsfreiheit der Verbindung der Schaltwelle des Schließzylinders mit dem Stellelement des Zündschalters sieht die Erfindung in weiterer Ausgestaltung vor, dass die wenigstens eine Kopplungsaufnahme und die wenigstens eine Verbindungsaufnahme auf gegenüberliegenden Seitenflächen des Zwischenausgleichselements als um 90° zueinander versetze Nuten ausgebildet sind.

Im Hinblick auf eine kostengünstige und einfache Herstellung des Zwischenausgleichselements sieht die Erfindung in weiterer Ausgestaltung vor, dass das Zwischenausgleichselement ein Kunststoffteil ist. Dadurch ist es möglich, das Kunststoffteil bzw. das Zwischenausgleichselement in einem standardmäßigen Spritzgießprozess kostengünstig herzustellen.

Die Erfindung sieht in alternativer Ausgestaltung vor, dass die Schaltwelle an ihrem freien Längsende wenigstens eine sich in Richtung der Längsachse erstreckende Kopplungsvertiefung aufweist, die einen auf einer Seitenfläche des Zwischenausgleichselements angeformten Kopplungsansatz spielfrei zu der ersten Achsrichtung und bewegbar in die zweite Achsrichtung aufnimmt.

Schließlich sieht die Erfindung in Weiterbildung der alternativen Ausgestaltung vor, dass das Stellelement wenigstens eine sich in Richtung der Längsachse erstreckende Verbindungsvertiefung aufweist, die einen auf einer dem Kopplungsansatz gegenüberliegenden Seitenfläche des Zwischenausgleichselements angeformten Verbindungsansatz bewegbar in die erste Achsrichtung und spielfrei zu der zweiten Achsrichtung aufnimmt.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 ein erfindungsgemäßes Kraftfahrzeug-Lenkschloss in perspektivischer Ansicht,
Figur 2 das erfindungsgemäße Kraftfahrzeug-Lenkschloss ohne Gehäuse in einer weiteren perspektivischen Darstellung,
Figur 3 eine perspektivische Ansicht auf einen Schließzylinder mit einer Schaltwelle, ein Stellelement eines Zündschalters und ein dazwischen angeordnetes Zwischenausgleichselement,
Figur 4 eine Einzelteildarstellung der in Figur 3 gezeigten Bauteile des erfindungsgemäßen Kraftfahrzeug-Lenkschlosses,
Figur 5 das Zwischenausgleichselement aus den Figuren 3 und 4 in perspektivischer Darstellung,
Figur 6 eine vergrößerte Ansicht der Schaltwelle und des Zwischenausgleichselements und
Figur 7 eine vergrößerte Ansicht des Stellelements und des Zwischenausgleichselements.

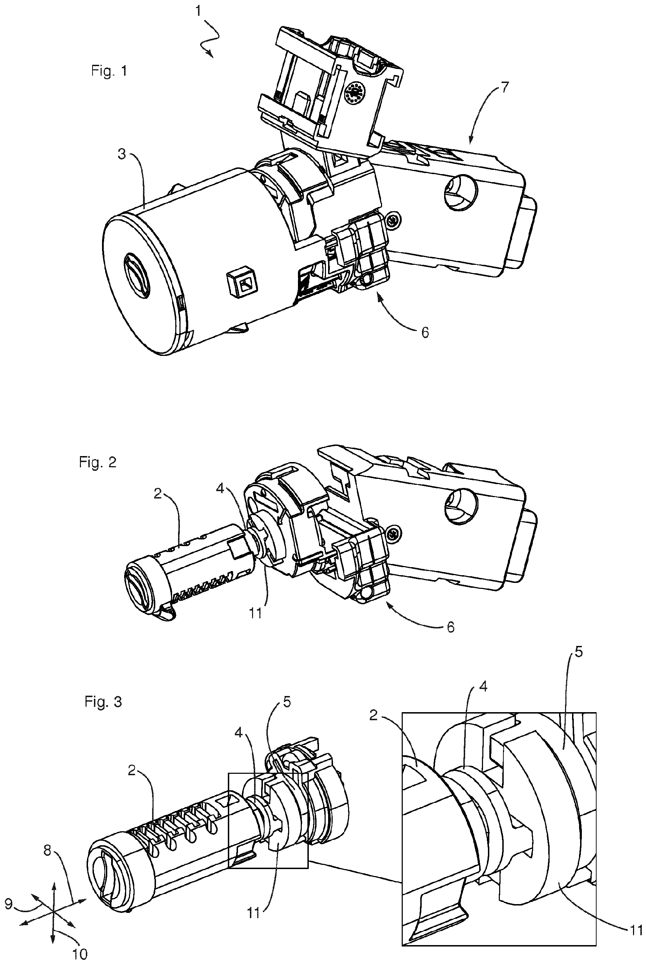

In Figur 1 ist ein Kraftfahrzeug-Lenkschloss 1 gezeigt. Das Kraftfahrzeug-Lenkschloss 1 weist einen in Figur 2 näher gezeigten Schließzylinder 2 auf, der in Figur 1 von einem Gehäuse 3 abgedeckt ist. Mit anderen Worten ist der Schließzylinder 2 in dem eine Abdeckung bildenden Gehäuse 3 angeordnet und weist eine Schaltwelle 4 auf, die mit Hilfe eines mechanischen Schlüssels verschiedene Drehstellungen einnehmen kann, wenn ein passender und berechtigter Schlüssel stirnseitig in die Schlüsselöffnung am Gehäuse 3 in den drehbar gelagerten Schließzylinder 2 eingesteckt ist und gedreht wird. Die Schaltwelle 3 ist mit einem Stellelement 5 eines Zündschalters 6 bewegungsgekoppelt, so dass eine Drehbewegung der Schaltwelle 3 bei Drehung des Schließzylinders 2 zu einer Drehung des Stellelements 5 führt. In Abhängigkeit der Drehstellung löst dabei der Zündschalter 6 eine gewünschte Funktion im Kraftfahrzeug aus, wie zum Beispiel die Funktion einer Stromversorgung im Kraftfahrzeug ausschließlich aus der Starterbatterie für beispielsweise das Radio oder die Funktion einer Spannungsversorgung für Zündung und Motor-Verbraucher.

In den schematischen Darstellungen der Figuren 3 bis 7 ist die erfindungsgemäße Verbindung von Schaltwelle 3 und Stellelement 5 gezeigt, wobei aus Gründen der Übersichtlichkeit auf eine Darstellung der übrigen Bauteile des Kraftfahrzeug-Lenkschlosses 1, wie zum Beispiel die in Figur 1 gezeigte Lenkverriegelung 7 oder das Gehäuse 3 aus Figur 1, verzichtet wurde.

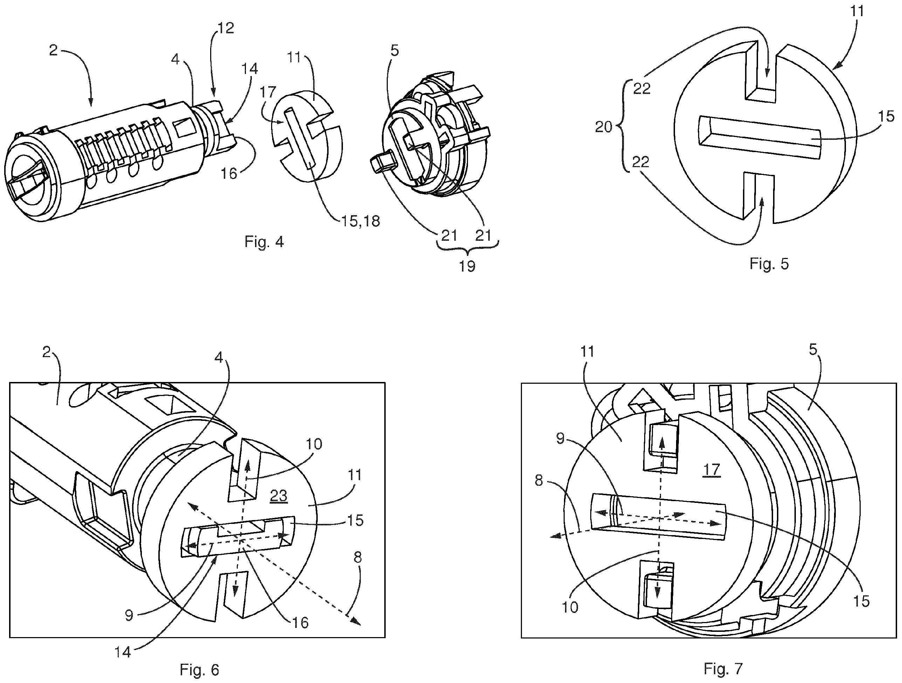

Gemäß der vorliegenden Erfindung mit Bezug auf die Figuren 2 bis 7 sind die Schaltwelle 4 des Schließzylinders 2 und das Stellelement 5 des Zündschalters 6 über ein erfindungsgemäßes Zwischenausgleichselement 11 drehfest miteinander verbunden. Das Zwischenausgleichselement 11 ist dabei derart ausgebildet, dass es eine Relativbewegung der Schaltwelle 4 zu dem Stellelement 5 in eine radial zur Längsachse 8 der Schaltwelle 4 verlaufende erste Achsrichtung 9 und eine Relativbewegung des Stellelements 5 zu der Schaltwelle 4 in eine zweite, senkrecht zu der ersten Achsrichtung 9 verlaufende Achsrichtung 10 zulässt. Um diese zweiachsige Freiheit im Sinne der Erfindung zu ermöglichen, weist die Schaltwelle 4 an ihrem freien Längsende 12 einen Kopplungsansatz 14 auf, wie zum Beispiel aus Figur 4 ersichtlich ist. Der Kopplungsansatz 14 erstreckt sich in Richtung der Längsachse 8 (siehe zum Beispiel Figur 6) und ist im zusammengebauten Zustand des Kraftfahrzeug-Lenkschlosses 1 in eine Kopplungsaufnahme 15 eingesteckt, die in dem Zwischenausgleichselement 11 ausgebildet ist. Dabei sind der Kopplungsansatz 14 der Schaltwelle 4 und die Kopplungsaufnahme 15 des Zwischenausgleichselements 11 derart zueinander ausgebildet, dass der Kopplungsansatz 14 in der Kopplungsaufnahme 15 spielfrei zu der ersten Achsrichtung 9 und in die zweite Achsrichtung 10 bewegbar eingesteckt ist. Auf diese Weise schafft das Zwischenausgleichselement 11 eine erste Achsfreiheit. Mit anderen Worten besitzt die Schaltwelle 4 einen Bewegungsfreiheitsgrad in die erste Achsrichtung 9, wobei eine Bewegungsfreiheit in Richtung der Längsachse 8 immer gegeben ist. Es versteht sich von selbst, dass nicht nur ein Kopplungsansatz 14 sondern mehrere stegförmige Ansätze in die eine oder in entsprechend mehrere Kopplungsaufnahmen 15 mit Spiel in die erste Achsrichtung 9 eingesteckt werden können. In dem in den Figuren gezeigten Ausführungsbeispiel ist der Kopplungsansatz 14 als ein mittiger, querverlaufender Kopplungssteg 16 an dem freien Längsende 12 der Schaltwelle 4 ausgebildet. Dementsprechend ist die Kopplungsaufnahme 15 als ein Kopplungsschlitz 18 ausgebildet, der in einer der Schaltwelle 4 zugewandten Seitenfläche 17 (siehe Figur 7) des Zwischenausgleichselements 11 ausgeformt ist. Im Hinblick auf die gewünschte zweiachsige Bewegungsfreiheit ist der Kopplungssteg 16 mit Spiel in Längsrichtung 8 und in Richtung der zweiten Achsrichtung 10 in den Kopplungsschlitz 18 eingepasst, so dass sich die Schaltwelle 4 und damit der Schließzylinder 2 in dem Zwischenausgleichselement 11 in die erste Achsrichtung 9 und relativ zu dem Stellelement 5 bewegen kann. Der Kopplungssteg 16 der Schaltwelle 4 des Schließzylinders 2 und der in die erste Achsrichtung 9 verlaufende Kopplungsschlitz 18 des Zwischenausgleichselements 11 sorgen damit für einen Freiheitsgrad der Bewegung der Schaltwelle 4 relativ zu dem Stellelement 5 in eine Raumrichtung.

Für einen weiteren Freiheitsgrad der Relativbewegung sieht die Erfindung vor, dass das Stellelement 5 einen Verbindungsansatz 19 aufweist, der in Richtung der Längsachse 8 hervorsteht. Der Verbindungsansatz 19 ist in eine Verbindungsaufnahme 20 eingesteckt. Die Verbindungsaufnahme 20 ist dabei in dem Zwischenausgleichselement 11 derart ausgeformt, dass der Verbindungsansatz 19 bewegbar in die zweite Achsrichtung 10 und spielfrei zu der ersten Achsrichtung 9 mit dem Zwischenausgleichselement 11 gekuppelt ist. Es versteht sich, dass auch mehr als nur ein einziger Verbindungsansatz 19 vorgesehen sein kann, der in eine einzige entsprechende Verbindungsaufnahme 20 mit Spiel in die zweite Achsrichtung 10 eingepasst ist. Wie jedoch dem konkreten Ausführungsbeispiel der Figuren zu entnehmen ist, umfasst der Verbindungsansatz 19 zwei sich diametral gegenüberliegende Verbindungszapfen 21, die an dem Stellelement 5 ausgebildet sind. Dementsprechend weist die Verbindungsaufnahme 20 zwei in einer dem Stellelement 5 zugewandten Seitenfläche 23 (siehe Figur 6) des Zwischenausgleichselements 11 ausgeformte Radialschlitze 22 auf. Um den gewünschten Bewegungsfreiheitsgrad zu erzielen, sind die Verbindungszapfen 21 mit Spiel in Längsrichtung 8 und insbesondere mit Spiel in Richtung der zweiten Achsrichtung 10 in die zugeordneten Radialschlitze 22 eingepasst.

Die schlitzförmige Ausgestaltung der Kopplungsaufnahme 15 und der Verbindungsaufnahme 20 des Zwischenausgleichselements 11 ist hilfreich, um Bauraum in Axialrichtung, d.h. in Richtung der Längsachse 8, einzusparen, denn als Erhebung auf den Seitenflächen 17, 23 des Zwischenausgleichselements 11 ausgebildete Aufnahmen für die Ansätze 14, 19 von Schaltwelle 4 und Stellelement 5 würden den Einbauraum in Richtung der Längsachse 8 verlängern und damit erhöhen. Dementsprechend ist das Zwischenausgleichselement 11 scheibenförmig und vorzugsweise dünn ausgebildet, wobei die Kopplungsaufnahme 15 und/oder die Verbindungsaufnahme 20 als jeweilige Ausnehmung in einer zugeordneten Seitenfläche 17, 23 des Zwischenausgleichselements 11 oder als Durchtrittsöffnung im Zwischenausgleichselement 11 ausgeformt ist/sind. In dem in den Figuren gezeigten Ausführungsbeispiel sind die Aufnahmen 15, 20 als Durchtrittsöffnungen ausgebildet, was im Hinblick auf den Einbauraum des Kraftfahrzeug-Lenkschlosses 1 die günstigste Ausgestaltung ist. Dabei wird die zweiachsige Bewegungsfreiheit von Schaltwelle 4 und Stellelement 5 wie vorstehend beschrieben erreicht, wobei die Kopplungsaufnahme 15 bzw. der Kopplungsschlitz 18 und die Verbindungsaufnahme 20 bzw. die Radialschlitze 22 auf den sich gegenüberliegenden Seitenflächen 17, 23 des Zwischenausgleichselements 11, welches als Kunststoffteil ausgebildet ist, als um 90° zueinander versetze Nuten ausgebildet sind.

Alternativ zu der vorstehend beschriebenen und in den Figuren gezeigten Ausführungsform ist es auch denkbar, die Anordnung von Ausnehmung und Ansatz an den jeweiligen Bauteilen zu vertauschen. Beispielsweise könnte in einer alternativen Ausgestaltung die Schaltwelle 4 an ihrem freien Längsende 12 wenigstens eine Kopplungsvertiefung aufweisen, die sich in Richtung der Längsachse 8 erstreckt. Diese Kopplungsvertiefung würde dann einen Kopplungsansatz, der auf einer Seitenfläche 17 des Zwischenausgleichselements 11 angeformt ist, spielfrei zu der ersten Achsrichtung 9 und bewegbar in die zweite Achsrichtung 10 aufnehmen. Entsprechend würde dann bei dieser alternativen Ausgestaltung des Kraftfahrzeug-Lenkschlosses 1 das Stellelement 5 wenigstens eine Verbindungsvertiefung aufweisen, die sich in Richtung der Längsachse 8 erstreckt. Diese Verbindungsvertiefung würde dementsprechend einen Verbindungsansatz bewegbar in die erste Achsrichtung 9 und spielfrei zu der zweiten Achsrichtung 10 aufnehmen, wobei der Verbindungsansatz auf einer dem Kopplungsansatz gegenüberliegenden Seitenfläche 23 des Zwischenausgleichselements 11 angeformt wäre.

Die Begriffe "spielfrei" und "Spielfreiheit" im Sinne der Erfindung bedeuten am Beispiel des Kopplungsansatzes 14, dass bei Spielfreiheit in die erste Achsrichtung 9 eine Bewegung des Kopplungsansatzes 14 in die erste Achsrichtung 9 nicht möglich ist.

Durch das vorstehend beschriebene Zwischenausgleichselement 11 ist eine Möglichkeit gegeben, Toleranzen zwischen der Schaltwelle 4 des Schließzylinders 2 und dem steuernden Stellelement 5 des Zündanlassschalters 6 auszugleichen.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Beispielsweise könnten für die Schaltwelle 4 und/oder das Stellelement 5 die Richtungen der Spielfreiheit und der Bewegungsfreiheit mit Bezug auf das in den Figuren gezeigte Ausführungsbeispiel vertauscht sein. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Kraftfahrzeug-Lenkschloss (1), aufweisend ein Gehäuse (3), in welchem ein Schließzylinder (2) mit einer Schaltwelle (4) angeordnet ist, die verschiedene Drehstellungen einnehmen kann, und ein mit der Schaltwelle (4) des Schließzylinders (2) bewegungsgekoppeltes Stellelement (5) eines Zündschalters (6), der in Abhängigkeit der Drehstellung der Schaltwelle (4) eine gewünschte Funktion im Kraftfahrzeug auslöst,
**dadurch gekennzeichnet, dass**
die Schaltwelle (4) des Schließzylinders (2) und das Stellelement (5) des Zündschalters (6) über ein eine Relativbewegung der Schaltwelle (4) zu dem Stellelement (5) in eine radial zur Längsachse (8) der Schaltwelle (4) verlaufende erste Achsrichtung (9) und eine Relativbewegung des Stellelements (5) zu der Schaltwelle (4) in eine zweite, senkrecht zu der ersten Achsrichtung (9) verlaufende Achsrichtung (10) zulassendes Zwischenausgleichselement (11) drehfest miteinander verbunden sind.

2. Kraftfahrzeug-Lenkschloss (1) nach Anspruch 1, **dadurch gekennzeichnet, dass** die Schaltwelle (4) an ihrem freien Längsende (12) wenigstens einen in Richtung der Längsachse (8) hervorstehenden Kopplungsansatz (14) aufweist, der in wenigstens eine in dem Zwischenausgleichselement (11) ausgeformte Kopplungsaufnahme (15) spielfrei zu der zweiten Achsrichtung (10) und bewegbar in die erste Achsrichtung (9) eingesteckt ist.

3. Kraftfahrzeug-Lenkschloss (1) nach Anspruch 2, **dadurch gekennzeichnet, dass** der Kopplungsansatz (14) als ein mittiger, querverlaufender Kopplungssteg (6) an dem freien Längsende (12) der Schaltwelle (4) ausgebildet ist und die Kopplungsaufnahme (15) als ein in einer der Schaltwelle (4) zugewandten Seitenfläche (17) des Zwischenausgleichselements (11) ausgeformter Kopplungsschlitz (18) ausgebildet ist, wobei der Kopplungssteg (16) mit Spiel in Längsrichtung (8) und in Richtung der ersten Achsrichtung (9) in den Kopplungsschlitz (18) eingepasst ist.

4. Kraftfahrzeug-Lenkschloss (1) nach einem der vorhergehenden Ansprüche, **dadurch gekennzeichnet, dass** das Stellelement (5) wenigstens einen in Richtung der Längsachse (8) hervorstehenden Verbindungsansatz (19) aufweist, der in wenigstens eine in dem Zwischenausgleichselement (11) ausgeformte Verbindungsaufnahme (20) bewegbar in die zweite Achsrichtung (10) und spielfrei zu der ersten Achsrichtung (9) eingesteckt ist.

5. Kraftfahrzeug-Lenkschloss (1) nach Anspruch 4, **dadurch gekennzeichnet, dass** der Verbindungsansatz (19) als zwei, sich diametral gegenüberliegende Verbindungszapfen (21) an dem Stellelement (5) ausgebildet ist und die Verbindungsaufnahme (20) als zwei in einer dem Stellelement (5) zugewandten Seitenfläche (23) des Zwischenausgleichselements (11) ausgeformte Radialschlitze (22) ausgebildet ist, wobei die Verbindungszapfen (21) mit Spiel in Längsrichtung (8) und in Richtung der zweiten Achsrichtung (10) in die Radialschlitze (22) eingepasst sind.

6. Kraftfahrzeug-Lenkschloss (1) nach Anspruch 3 oder 5, **dadurch gekennzeichnet, dass** das Zwischenausgleichselement (11) scheibenförmig ausgebildet ist, wobei die wenigstens eine Kopplungsaufnahme (15) und/oder die wenigstens eine Verbindungsaufnahme (20) als Ausnehmung in einer jeweiligen Seitenfläche des Zwischenausgleichselements (11) oder als Durchtrittsöffnung im Zwischenausgleichselement (11) ausgeformt ist.

7. Kraftfahrzeug-Lenkschloss (1) nach Anspruch 6, **dadurch gekennzeichnet, dass** die wenigstens eine Kopplungsaufnahme (15) und die wenigstens eine Verbindungsaufnahme (20) auf gegenüberliegenden Seitenflächen (17, 23) des Zwischenausgleichselements (11) als um 90° zueinander versetze Nuten (18, 22) ausgebildet sind.

8. Kraftfahrzeug-Lenkschloss (1) nach einem der vorhergehenden Ansprüche, **dadurch gekennzeichnet, dass** das Zwischenausgleichselement (11) ein Kunststoffteil ist.

9. Kraftfahrzeug-Lenkschloss (1) nach Anspruch 1, **dadurch gekennzeichnet, dass** die Schaltwelle (4) an ihrem freien Längsende (12) wenigstens eine sich in Richtung der Längsachse (8) erstreckende Kopplungsvertiefung aufweist, die einen auf einer Seitenfläche (17) des Zwischenausgleichselements (11) angeformten Kopplungsansatz spielfrei zu der ersten Achsrichtung (9) und bewegbar in die zweite Achsrichtung (10) aufnimmt.

10. Kraftfahrzeug-Lenkschloss (1) nach Anspruch 9, **dadurch gekennzeichnet, dass** das Stellelement (5) wenigstens eine sich in Richtung der Längsachse (8) erstreckende Verbindungsvertiefung aufweist, die einen auf einer dem Kopplungsansatz gegenüberliegenden Seitenfläche (17, 23) des Zwischenausgleichselements (11) angeformten Verbindungsansatz bewegbar in die erste Achsrichtung (9) und spielfrei zu der zweiten Achsrichtung (10) aufnimmt.

## Claims

1. A motor vehicle steering lock (1), which has a housing (3) in which a lock cylinder (2) is disposed with a selector shaft (4), which can assume various rotational positions, and an adjustment element (5) of an ignition switch (6) that is moveably coupled to the selector shaft (4) of the lock cylinder (2), which triggers a desired function in the motor vehicle, depending on the rotational position of the selector shaft (4), **characterized in that** the selector shaft (4) of the lock cylinder (2) and the adjustment element (5) of the ignition switch (6) are connected for conjoint rotation via an intermediate compensating element (11) that allows for a movement of the selector shaft (4) in relation to the adjustment element (5) in a first axis direction (9), radial to the longitudinal axis (8) of the selector shaft (4), and a movement of the adjustment element (5) in relation to the selector shaft (4) in a second axis direction (10), perpendicular to the first axis direction (9).

2. The motor vehicle steering lock (1) according to claim 1, **characterized in that** the selector shaft (4) has at least one coupling projection on its free longitudinal end (12), projecting in the direction of the longitudinal axis (8), which is inserted into at least one coupling receiver (15) formed in the intermediate compensating element (11), without play in relation to the second axis direction (10) and able to move in the first axis direction (9).

3. The motor vehicle steering lock (1) according to claim 2, **characterized in that** the coupling projection (14) is designed as a central, transverse coupling tab (6) on the free longitudinal end (12) of the selector shaft (4), and the coupling receiver (15) is designed as a coupling slot (18) formed in a lateral surface (17) of the intermediate compensating element (11) facing the selector shaft (4), wherein the coupling tab (16) fits into the coupling slot (18) with play in the longitudinal direction (8) and in the first axis direction (9).

4. The motor vehicle steering lock (1) according to any of the preceding claims, **characterized in that** the adjustment element (5) has at least one connecting projection (19) that extends in the direction of the longitudinal axis (8), which is inserted into at least one connecting receiver (20) formed in the intermediate compensating element (11), such that it can move in the second axis direction (10), and is without play in relation to the first axis direction (9).

5. The motor vehicle steering lock (1) according to claim 4, **characterized in that** the connecting projection (19) is designed as two diametrically opposing connecting pins (21) on the adjustment element (5), and the connecting receiver (20) is designed as two radial slots (22) formed in a lateral surface (23) of the intermediate compensating element (11) facing the adjustment element (5), wherein the connecting pins (21) are fit into the radial slots (22) with play in the longitudinal direction (8) and in the second axis direction (10) .

6. The motor vehicle steering lock (1) according to claim 3 or 5, **characterized in that** the intermediate compensating element (11) has a disk-shaped design, wherein the at least one coupling receiver (15) and/or the at least one connecting receiver (20) are formed as recesses in a respective lateral surface of the intermediate compensating element (11), or as through holes in the intermediate compensating element (11).

7. The motor vehicle steering lock (1) according to claim 6, **characterized in that** the at least one coupling receiver (15) and the at least one connecting receiver (20) are formed on opposite lateral surfaces (17, 23) of the intermediate compensating element (11) as grooves (18, 22) offset to one another by 90°.

8. The motor vehicle steering lock (1) according to any of the preceding claims, **characterized in that** the intermediate compensating element (11) is a plastic component.

9. The motor vehicle steering lock (1) according to claim 1, **characterized in that** the selector shaft (4) has at least one coupling depression on its free longitudinal end (12) extending in the direction of the longitudinal axis (8), which receives a coupling projection formed on a lateral surface (17) of the intermediate compensating element (11), without play in relation to the first axis direction (9) and able to move in the second axis direction (10).

10. The motor vehicle steering lock (1) according to claim 9, **characterized in that** the adjustment element (5) has at least one connecting depression extending in the direction of the longitudinal axis (8), which receives a connecting projection formed on a lateral surface (x) of the intermediate compensating element (11) lying opposite the coupling projection, such that it can move in the first axis direction (9) and is without play in relation to the second axis direction (10).

## Revendications

1. Verrou de direction de véhicule automobile (1), comportant un boîtier (3), dans lequel est disposé un barillet de serrure (2) avec un arbre de sélection (4), qui peut adopter différentes positions de rotation et un élément de réglage (5) d'un contacteur-démarreur (6), accouplé en mouvement à l'arbre de sélection (4) du barillet de serrure (2), qui déclenche une fonction souhaitée dans le véhicule automobile en fonction de la position de rotation de l'arbre de sélection (4),
***caractérisé en ce que***
l'arbre de sélection (4) du barillet de serrure (2) et l'élément de réglage (5) du contacteur-démarreur (6) sont reliés l'un à l'autre solidaire en rotation par le biais d'un élément de compensation intermédiaire (11) permettant un mouvement relatif de l'arbre de sélection (4) par rapport à l'élément de réglage (5) dans une première direction axiale (9) passant radialement à l'axe longitudinal (8) de l'arbre de sélection (4) et un mouvement relatif de l'élément de réglage (5) par rapport à l'arbre de sélection (4) dans une deuxième direction axiale (10) passant perpendiculairement à la première direction axiale (9) .

2. Verrou de direction de véhicule automobile (1) selon la revendication 1, ***caractérisé en ce que*** l'arbre de sélection (4) comporte à son extrémité longitudinale libre (12) au moins un téton d'accouplement (14) faisant saillie en direction de l'axe longitudinal (8), qui est inséré dans au moins un logement d'accouplement (15) conformé dans l'élément de compensation intermédiaire (11) sans jeu par rapport à la deuxième direction axiale (10) et de façon mobile dans la première direction axiale (9).

3. Verrou de direction de véhicule automobile (1) selon la revendication 2, ***caractérisé en ce que*** le téton d'accouplement (14) est constitué comme une nervure d'accouplement (6) centrale, passant transversalement à l'extrémité longitudinale libre (12) de l'arbre de sélection (4) et le logement d'accouplement (15) est constitué comme une fente d'accouplement (18) conformée dans une surface latérale (17) de l'élément de compensation intermédiaire (11) tournée vers l'arbre de sélection (4), la nervure d'accouplement (16) étant emboîtée dans la fente d'accouplement (18) avec jeu en direction longitudinale (8) et en direction de la première direction axiale (9).

4. Verrou de direction de véhicule automobile (1) selon l'une quelconque des revendications précédentes, ***caractérisé en ce que*** l'élément de réglage (5) comporte au moins un téton de liaison (19) faisant saillie en direction de l'axe longitudinal (8), qui est inséré dans au moins un logement de liaison (20) conformé dans l'élément de compensation intermédiaire (11) de façon mobile dans la deuxième direction axiale (10) et sans jeu par rapport à la première direction axiale (9).

5. Verrou de direction de véhicule automobile (1) selon la revendication 4, ***caractérisé en ce que*** le téton de liaison (19) est constitué sur l'élément de réglage (5) sous la forme de deux tenons de liaison (21) s'opposant diamétralement et le logement de liaison (20) est constitué sous la forme de deux fentes radiales (22) conformées dans une surface latérale (23) de l'élément de compensation intermédiaire (11) tournée vers l'élément de réglage (5), les tenons de liaison (21) étant emboîtés avec jeu dans la fente radiale (22) dans la direction longitudinale (8) et dans la direction de la deuxième direction axiale (10) .

6. Verrou de direction de véhicule automobile (1) selon la revendication 3 ou 5, ***caractérisé en ce que*** l'élément de compensation intermédiaire (11) est constitué en forme de rondelle, au moins un logement d'accouplement (15) et/ou au moins un logement de liaison (20) étant conformé comme évidement dans une surface latérale respective de l'élément de compensation intermédiaire (11) ou comme ouverture de passage dans l'élément de compensation intermédiaire (11) .

7. Verrou de direction de véhicule automobile (1) selon la revendication 6, *caractérisé en ce qu*'au moins un logement d'accouplement (15) et au moins un logement de liaison (20) sont constitués sur des surfaces latérales opposées (17, 23) de l'élément de compensation intermédiaire (11) sous la forme de rainures (18, 22) déportées de 90° l'une par rapport à l'autre.

8. Verrou de direction de véhicule automobile (1) selon l'une quelconque des revendications précédentes, ***caractérisé en ce que*** l'élément de compensation intermédiaire (11) est une pièce en matière plastique.

9. Verrou de direction de véhicule automobile (1) selon la revendication 1, ***caractérisé en ce que*** l'arbre de sélection (4) comporte à son extrémité longitudinale libre (12) au moins une cavité d'accouplement s'étendant en direction de l'axe longitudinal (8), qui loge un téton d'accouplement conformé sur une surface latérale (17) de l'élément de compensation intermédiaire (11) sans jeu par rapport à la première direction axiale (9) et de façon mobile dans la deuxième direction axiale (10).

10. Verrou de direction de véhicule automobile (1) selon la revendication 9, ***caractérisé en ce que*** l'élément de réglage (5) comporte au moins une cavité de liaison s'étendant en direction de l'axe longitudinal (8), qui loge un téton de liaison conformé sur une surface latérale (17, 23) de l'élément de compensation intermédiaire (11) opposée au tenon d'accouplement de façon mobile dans la première direction axiale (9) et sans jeu par rapport à la deuxième direction axiale (10) .
